Europäisches Patentamt

European Patent Office

Office européen des brevets

(11) Veröffentlichungsnummer: **0 011 250**
**B1**

(12) **EUROPÄISCHE PATENTSCHRIFT**

(45) Veröffentlichungstag der Patentschrift:
21.04.82

(51) Int. Cl.³. **B 60 P 1/16, B 60 P 3/06**

(21) Anmeldenummer. 79104401.9

(22) Anmeldetag: 09.11.79

(54) **Fahrzeug zum Laden und Transportieren von Schwergut, insbesondere von Kraftfahrzeugen.**

(30) Priorität: **10.11.78 DE 2848904**

(43) Veröffentlichungstag der Anmeldung:
**28.05.80 Patentblatt 80/11**

(45) Bekanntmachung des Hinweises auf die Patenterteilung.
**21.04.82 Patentblatt 82/16**

(84) Benannte Vertragsstaaten:
**DE FR GB IT NL SE**

(56) Entgegenhaltungen:
1. **CA-A-986 155**
2. **DE-A-2 302 199**
3. **DE-B2-2 525 216**
4. **FR-A1-2 408 482**
5. **GB-A-1 011 789**
6. **US-A-2 441 710**
7. **US-A-3 450 282**
8. **US-A-3 811 697**

(73) Patentinhaber: **Znidaric, Kruno, Bernsteinweg 12,
D-8000 München 45 (DE)**

(72) Erfinder: **Znidaric, Kruno, Bernsteinweg 12,
D-8000 München 45 (DE)**

(74) Vertreter: **Kraus, Walter, Dr. et al, Patentanwälte Dres.
Kraus & Weisert Irmgardstrasse 15,
D-8000 München 71 (DE)**

BUNDESDRUCKEREI BERLIN

## Fahrzeug zum Laden und Transportieren von Schwergut, insbesondere von Kraftfahrzeugen

Die Erfindung betrifft ein Fahrzeug zum Laden und Transportieren von Schwergut, insbesondere von Kraftfahrzeugen, nach dem Oberbegriff des Anspruchs 1 (US-A-3 450 282).

Derartige Fahrzeuge sind zum Transport von beispielsweise fahrunfähigen oder zu überführenden Kraftfahrzeugen, jedoch auch schweren Baufahrzeugen und Baugeräten oder Tresorschränken bestimmt. Das Laden kann durch eigene Kraft des zu transportierenden Kraftfahrzeugs oder mit Hilfe einer am vorderen Ende der Ladebrücke angeordneten Seilwinde geschehen.

Bei bekannten Fahrzeugen dieser Art ist eine durch zwei Hydraulikeinheiten kippbare Hilfsbrücke vorgesehen, auf der die eigentliche Ladebrücke durch zwei weitere Hydraulikeinheiten längs ausfahrbar angeordnet ist. Bei anderen solchen Fahrzeugen wird die Ladebrücke nur gekippt, nicht aber längs ausgefahren. Beim Bau dieser Fahrzeuge muß ein großer Radstand vorhanden sein, da die Ausrüstung mit einer genügend langen Ladebrücke dies wegen der strengen Beladungsvorschriften erfordert. Die serienmäßigen Fahrgestelle sind somit nicht verwendbar; es muß auf teurere Spezialfahrgestelle zurückgegriffen werden. Schließlich sind noch aufwendiger konstruierte Fahrzeuge dieser Art bekannt, bei denen die Ladebrücke auf einem knickbaren Fahrgestellrahmen nur längsausfahrbar angeordnet ist.

So ist aus der US-A-3 450 282 ein Fahrzeug 8 zum Laden und Transportieren von Schwergut, insbesondere von Kraftfahrzeugen, bekannt, das mit einer Ladebrücke 10 versehen ist, die direkt auf dem Fahrgestellrahmen 14, 14' sowohl längsverschiebbar als auch um dessen Heck, d. h. bei 21, kippbar gelagert ist; und weiterhin ist eine durch eine Arbeitsvorrichtung 20 betätigbare Ausfahr- und Kippvorrichtung für die Ladebrücke 10 vorgesehen.

Die Arbeitsvorrichtung 20 greift einerseits an der Ladebrücke 10 und andererseits am Heck des Fahrgestellrahmens 14, 14' an und dient dazu, den gegenseitigen Abstand zwischen dem vorderen Ende der Ladebrücke und dem Heck des Fahrgestellrahmens 14, 14' zu verändern. Weiterhin ist mindestens ein Schwenkhebel 18 vorgesehen, der in einem Drehpunkt unterhalb der Wirklinie der Arbeitsvorrichtung 20 am Fahrgestellrahmen 14, 14' schwenkbar gelagert ist und ein Gleitstück 22 aufweist, das mit einem Anschlag 28 versehen ist, welcher mit einem entsprechenden Gegenanschlag zusammenwirkt, der seinerseits von dem vorderen Ende des rohrförmigen Teils des Schwenkhebels 18 gebildet wird, in welchem das Gleitstück 22 verschiebbar ist. Durch diese Anlage des Anschlags 28 mit dem in der Zeichnung nicht näher bezeichneten Gegenanschlag wird das Längsausfahren der Ladebrücke 10 begrenzt.

Bei diesem bekannten Fahrzeug läßt sich zwar die Ladebrücke 10 in verhältnismäßig einfacher Weise mittels der Arbeitsvorrichtung 20 in Längsrichtung verschieben und anschließend nach hinten abkippen, damit sie entladen oder beladen werden kann, aber zur Anbringung einer solchen Ladebrücke ist, wenn der Neigungswinkel der Ladebrücke 10 im abgekippten Zustand nicht einen für die Praxis des Beladens, insbesondere mit Kraftfahrzeugen, ungeeigneten großen Wert haben soll und wenn dabei gleichzeitig das hintere Ende der Ladebrücke den Boden berühren soll, ein Spezialfahrzeug erforderlich, dessen Fahrgestellrahmen am hinteren Ende verkürzt ist. Das sieht man deutlich aus der Figur 1 der US-A-3 450 282, denn dort ist der Fahrgestellrahmen gegenüber dem Fahrgestellrahmen von üblichen Lastkraftfahrzeugen so weit verkürzt, daß er nicht wesentlich über die Hinterräder hinausragt. Denn bei den üblichen Lastkraftfahrzeugen erstreckt sich der Fahrgestellrahmen um eine wesentliche Länge über die Hinterräder des Fahrzeugs hinaus. Ein solches »Abschneiden« des hinteren Endes des Fahrgestellrahmens wird, wenn man die Ladefläche nicht verkürzen will, in der Praxis dadurch vorgenommen, daß man den Radstand zwischen den Vorderrädern und den Hinterrädern des Fahrzeugs vergrößert, also die Hinterachse eines Fahrzeugs, das mit einer in Längsrichtung ausfahrbaren und mit ihrer Hinterkante bis auf den Boden abkippbaren Ladebrücke versehen werden soll, gegenüber einem normalen Lastkraftfahrzeug nach hinten versetzt.

Um bei schwerer Last das für einen PKW-Führerschein zulässige Gesamtgewicht nicht zu überschreiten, soll das Fahrzeug samt Ladebrücke möglichst leicht sein, ferner sollen die erforderlichen Herstellungskosten möglichst niedrig bleiben. Es sollen serienmäßige Fahrgestellrahmen für den Bau des Lade- und Transportfahrzeugs verwendet werden können, da Sonderanfertigungen mit erheblichen Mehrkosten verbunden sind. Die für die Lade- und Transportfunktionen erforderlichen Elemente sollen überdies möglichst einfach im Aufbau und in der Handhabung sein. Die gestellte Erfindungsaufgabe soll diese Anforderungen enthalten.

Aufgabe der Erfindung ist es somit, ein Fahrzeug zum Laden und Transportieren von Schwergut, insbesondere von Kraftfahrzeugen, zu schaffen, für das serienmäßige Fahrgestellrahmen verwendet werden können, so daß die mit der Sonderanfertigung von nichtserienmäßigen Fahrgestellrahmen verbundenen erheblichen Mehrkosten vermieden werden.

Diese Erfindungsaufgabe wird durch die kennzeichnenden Merkmale des Anspruchs 1 gelöst, während die Ansprüche 2 bis 15 die weitere Ausgestaltung der Erfindung betreffen.

In einfacher Weise wird für das Längsausfahren und Kippen der Ladebrücke sowie für das neuartige Absenken des Fahrzeughecks nur eine einzige Hydraulikvorrichtung benötigt. Diese Hydraulikeinheit braucht nicht sehr leistungsfähig ausgebildet zu sein, da durch die erfindungsgemäßen Maßnahmen eine günstige Ausnutzung der Kinematik und der Schwerpunktbewegungen möglich ist. Auch sind die erforderlichen Bauteile durchweg von einfacher und fester Bauart und sind praktisch wartungsfrei.

Die Erfindung wird im folgenden anhand der Zeichnung mit einem Ausführungsbeispiel erläutert. Es zeigt

Figur 1 ein erfindungsgemäßes Fahrzeug mit eingefahrener Ladebrücke, d. h. im Transportzustand, im teilweisen Längsschnitt;

Figur 2 mit längs ausgefahrener Ladebrücke im Teillängsschnitt;

Figur 3 mit voll ausgefahrener und gekippter Ladebrücke, ebenfalls im Teillängsschnitt; und

Figur 4 mit eingefahrener Ladebrücke in teilweise geschnittener Draufsicht.

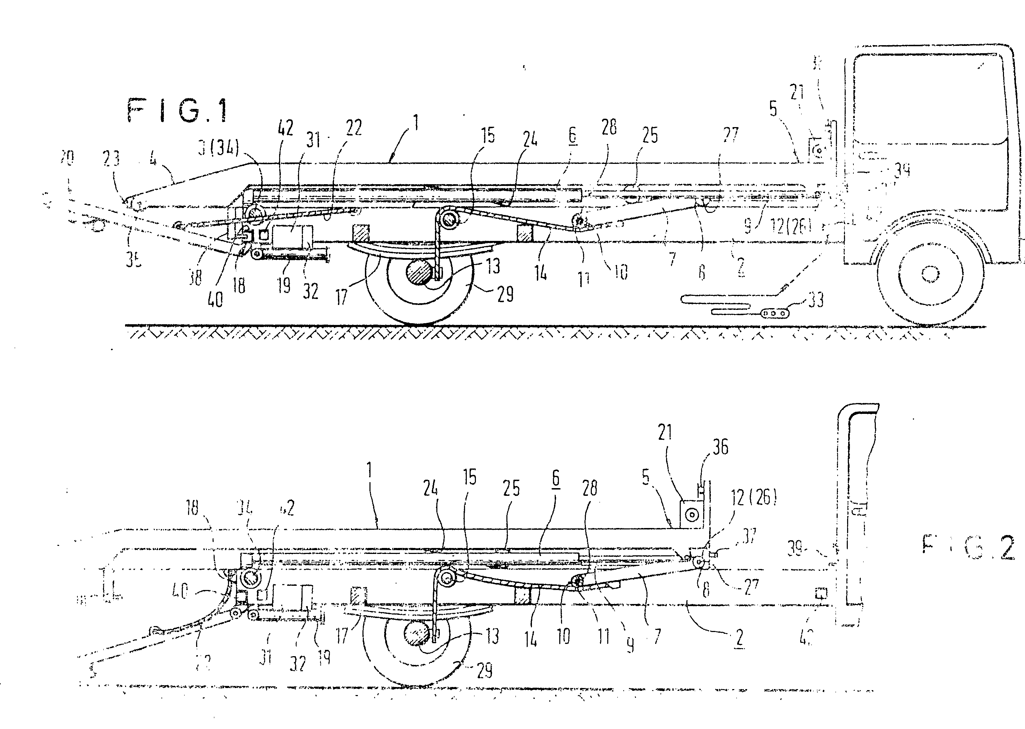

Nach der Zeichnung ist eine Ladebrücke 1 von üblicher Form direkt auf dem Fahrgestellrahmen 2 eines zum Laden und Transportieren von Schwergut, insbesondere von Kraftfahrzeugen, dienenden Fahrzeugs auf Gleitflächen 3, die auch Rollenvorrichtungen sein können, längsverschiebbar und mit das hintere Ende 4 des Fahrgestellrahmens 2 mit einer Auflagevorrichtung mit Auflagerollen 34 kippbar gelagert. Zur Betätigung dieser beiden Bewegungen ist eine einerseits nahe am vorderen Ende 5 der Ladebrücke 1 und andererseits nahe am Heck 18 des Fahrgestellrahmens 2 angelenkte und angreifende Hydraulikeinheit 6 in Gestalt einer Zylinder-Kolben-Einheit angeordnet. Zur Durchführung der Kippbewegung durch diese Hydraulikeinheit 6 sind zwei Schwenkhebel 7 mit je einer endseitigen Rolle 8 in je einem ladebrückenfesten, als Gleitbahn dienenden Längsschlitz 9 gleitfähig geführt und am anderen unteren Ende 10 unterhalb der Wirklinie der Hydraulikeinheit 6 — auf die Fahrtrichtung bezogen — hinter jener Rolle 8 in einem Drehpunkt 11 am Fahrgestellrahmen 2 schwenkbar gelagert. Das Vorderende 12 des Längsschlitzes 9 liegt bei eingefahrener Ladebrücke 1 gemäß Figur 1 um den Betrag der ausgefahrenen Länge von der Rolle 8 des entsprechenden Schwenkhebels 7 entfernt.

Gemäß Figur 2 sind an den Vorderenden 12 der Längsschlitze Anschläge 26 vorgesehen, die bei längs ausgefahrener Ladebrücke 1 an der Rolle 8 des entsprechenden Schwenkhebels 7 anliegen. Die Gesamtanordnung ist dabei so bemessen, daß der Gesamtschwerpunkt der Ladebrücke 1 samt ihrer Aufladelast auf die Fahrtrichtung bezogen etwa vor der Hinterachse 13 liegt.

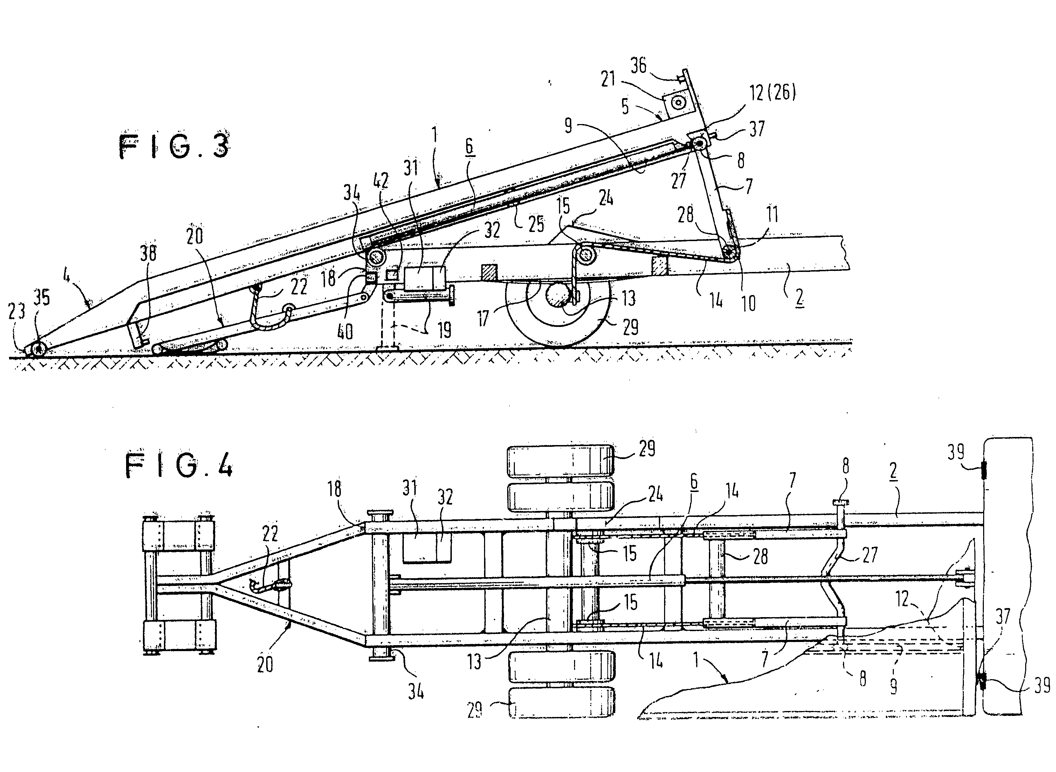

Figur 3 zeigt den gekippten Zustand der Ladebrücke 1, der durch Schwenken der mit ihrer endseitigen Rolle 8 am Vorderende 12 des Längsschlitzes 9 anliegenden Schwenkhebels 7 mittels der weiter verkürzten Hydraulikeinheit 6 erreicht worden ist.

Gemäß Figur 1 sind zwei mit der Hinterachse 13 des Fahrzeugs verbundene Seile 14 über je eine am Fahrgestellrahmen 2 angeordnete Umlenkrolle 15 und um das exzenterartig ausgebildete untere Ende 10 je eines Schwenkhebels 7 herumgeführt und an diesem befestigt. Gemäß Figur 3 werden diese Seile 14 demnach beim Schwenken der Schwenkhebel 7 eingezogen, wodurch sie die Federung 17 zusammendrücken und die Hinterachse 13 an den Fahrgestellrahmen 2 heranziehen. Das kraftschlüssige Spannen der Seile 14 beginnt vorzugsweise ab der Hälfte des Schwenkbereichs der Schwenkhebel 7 oder im letzten Teil desselben. Hierdurch senkt sich das Heck 18 des Fahrgestellrahmens 2 ab und mit ihm die Stützpunkte der Ladebrücke 1 in deren Mitte und an ihrem vorderen Ende. Sie kann dadurch in ihrem vollständig ausgefahrenen und gekippten Zustand einen kleineren Neigungswinkel erhalten als ohne diese erfindungsgemäße Maßnahme. Am Heck 18 des Fahrgestellrahmens 2 sind noch für den Fall, daß besonders schweres Ladegut geladen werden muß, zwei gesondert ausfahr- oder ausschwenkbare Bodenstützen 19 angeordnet.

Gemäß Figur 4 sind die beiden Schwenkhebel 7 mit einer vorderen oberen Querstange 27 und einer hinteren unteren Querstange 28 zu einem starren Bügel bzw. zu einem starren Rahmen verbunden.

In Figur 3 ist ferner eine an sich bekannte Schleppeinrichtung 20 zum Abschleppen eines beispielsweise auf einem Radpaar rollfähigen Fahrzeugs dargestellt. Diese Schleppeinrichtung 20 ist am Heck 18 des Fahrgestellrahmens 2 schwenkbar angeordnet und mit der Ladebrücke 1 mittels eines Kurzseils 22 derart verbunden, daß sie durch das Längsausfahren der Ladebrücke 1 bis zum Boden abgesenkt wird, so daß das Vorderende oder das Heck des abzuschleppenden Fahrzeugs aufgenommen werden kann. Beim Einfahren der Ladebrücke 1 mittels der Hydraulikeinheit 6 wird diese Schleppeinrichtung 20 selbsttätig in die Transportstellung angehoben.

Die Kippbewegung der Ladebrücke 1 nach dem Längsausfahren, d. h. der Beginn des Hochschwenkens der Schwenkhebel 7, wird in günstiger Weise von am Fahrgestellrahmen 2 angeordneten schrägen Auflaufflächen 24 unterstützt, die mit an der Ladebrücke 1 angebrachten Auflaufrollen 25 zusammenwirken. Diese Auflaufflächen 24 und -rollen 25 dämpfen andererseits auch beim Ladevorgang das Niedergehen der Ladebrücke 1, besonders im Falle von darauf befindlichem Ladegut. Ferner ist noch eine Seilwinde 21 am vorderen Ende 5 der Ladebrücke 1 angebracht.

Die Seilwinde 21 am vorderen Ende 5 der Ladebrücke 1 kann in der üblichen Weise für das Heraufziehen des Ladeguts auf die Ladebrücke 1 oder mit Hilfe von seitlich an derselben angebrachten Seilführungsrollen 36 auch dazu verwendet werden, beispielsweise bei der Bergung von verunglückten Fahrzeugen diese in eine geeignete Position zum Lade- und Transportfahrzeug zu bringen.

Um eine eindeutig feste Lage der Ladebrücke 1 auf dem Fahrzeug während der Fahrt zu gewährleisten, ist an der Ladebrücke 1 eine vordere 37 und eine hintere Rastvorrichtung 38 befestigt, die beim Einfahren der Ladebrücke 1 in die Transportstellung jeweils in eine passende vordere 39 bzw. hintere Rastausnehmung 40 am Fahrgestellrahmen 2 einrasten. Am Hinterende 23 der Ladebrücke 1 befinden sich noch Bodenrollen oder -walzen 35.

Am Fahrgestellrahmen 2 sind an geeigneten Stellen die für den Betrieb der Hydraulikeinheit 6 erforderliche Hydraulikpumpe 31, die hydraulische Steuereinrichtung 32 und Steckdosen 42 für den Anschluß des mit einem längeren Kabel versehenen Fernbedienungsschalters 33 angeordnet.

Die Wirkungsweise der Erfindung ist folgendermaßen:

Durch Einleiten von Druckflüssigkeit in die vordere Druckkammer der Hydraulikeinheit 6 wird deren Länge verkleinert. Die Ladebrücke 1 wird nach hinten längs ausgefahren, bis die endseitigen Rollen 8 der Schwenkhebel 7 die Anschläge 26 an den Vorderenden 12 der jeweiligen Längsschlitze 9 berühren. Von hier an wird bei weiterer Verkürzung der Hydraulikeinheit 6 durch Hochschwenken der Schwenkhebel 7 die Ladebrücke 1 um das Heck 18 des Fahrgestellrahmens 2 gekippt, bis die Schwenkhebel 7 ihren größten Ausschlag erreicht haben, also etwa senkrecht oder genau senkrecht zur Ladebrücke 1 stehen, und Bodenberührung des Hinterendes 23 der Ladebrücke 1 eintritt, gegebenenfalls auf den Bodenwalzen oder -rollen 35. Hierbei kann sich in bestimmten Fällen die Ladebrücke 1 von ihrer Kippauflage, d. h. den Auflagerollen 34, am Heck 18 des Fahrgestellrahmens 2 abheben. Eine gute Seitenstabilität ist in jedem Falle gegeben, insbesondere auch dadurch, daß der Fahrgestellrahmen 2, durch seine eigene feste Auflage auf der Hinterachse 13, auch der Ladebrücke 1 in gekipptem Zustand eine eindeutig feste Abstützung bietet.

Das Speichern eines Teiles der für die Kippbewegung erforderlichen Energie in der gespannten Federung 17 dämpft in steigendem Maße einerseits wirksam den späteren Teil des Kippvorgangs, andererseits steht diese Energie beim Aufladevorgang wieder unterstützend zur Verfügung, wenn die Ladebrücke 1, gegebenenfalls mit dem aufgeladenen Schwergut, wieder in die Transportstellung gebracht werden soll.

Die Erfindung ermöglicht es, wegen des Auskommens mit einer einzigen Arbeitsvorrichtung geringer Leistung, den gesamten Ladevorgang, d. h. das Betätigen der Ladebrückenbewegungen, lediglich mit der fahrzeugeigenen Batterie zu betreiben, d. h. bei stehendem Motor.

Abgesehen von dem erheblichen Vorteil, daß das erfindungsgemäße Fahrzeug unter Verwendung eines für Lastkraftfahrzeuge serienmäßigen Fahrgestellrahmens hergestellt werden kann, erbringt die nach der Erfindung vorgesehene Zugvorrichtung einen weiteren beträchtlichen Vorteil:

Durch das Zusammendrücken der Federung 17 an der Hinterachse des Fahrzeugs beim Abkippen der Ladebrücke 1 wird ein Teil der für die Kippbewegung erforderlichen Energie durch das Spannen der Federung 17 gespeichert. Dadurch wird einerseits beim Abkippen der Ladebrücke 1 der Kippvorgang in seinem letzten Teil in steigendem Maße bzw. progressiv gedämpft, so daß ein hartes Aufschlagen des hinteren Endes der Ladebrücke 1 auf den Erdboden vermieden wird und dieses Auftreffen vielmehr sanft erfolgt. Und andererseits steht diese Energie, die durch das Spannen der Federung 17 beim Abkippen der Ladebrücke gespeichert wird, beim Aufladevorgang, d. h. beim Zurückkippen der Ladebrücke 1 auf den Fahrgestellrahmen 2, zusätzlich zu der Energie der Arbeitsvorrichtung 6 zur Verfügung, was besonders vorteilhaft ist, wenn die Ladebrücke 1 mit Schwergut beladen ist, da in diesem Falle gerade bei Beginn des Zurückkippens der Ladebrücke 1 auf den Fahrgestellrahmen 2 eine verhältnismäßig hohe Kraft für die Durchführung dieses Zurückkippvorgangs benötigt wird.

Das vorstehend erläuterte Speichern von Energie in der Federung 17 hat, insbesondere in Verbindung mit einer Weiterbildung der Erfindung, nach der am Fahrgestellrahmen 2 wenigstens eine das Kippen der Ladebrücke 1 nach deren Längsausfahren unterstützende schräge Auflauffläche 24 für jeweils ein an der Ladefläche 1 befestigtes, vorzugsweise als Rolle ausgebildetes, Auflaufstück 25 angeordnet ist, den Vorteil, daß man mit einer einzigen Arbeitsvorrichtung von verhältnismäßig geringer Leistung auskommt und damit den gesamten Ladevorgang, d. h. das Betätigen der Ladebrückenbewegungen, lediglich mit der fahrzeugeigenen Batterie betreiben kann, also bei stehendem Motor. Denn die beiden Bewegungsphasen der Ladebrücke 1, die am meisten Kraft benötigen, sind einerseits der Beginn des Abkippvorgangs der Ladebrücke 1 vom Fahrgestellrahmen 2 und andererseits der Beginn des Zurückkippvorgangs der Ladebrücke 1 auf den Fahrgestellrahmen 2, da in diesen beiden Fällen die maximale Last wirkt, wobei in der erstgenannten Bewegungsphase der lastseitig wirkende Hebelarm verhältnismäßig groß ist und in dieser Phase durch die Auflaufflächen 24 und die damit zusammenwirkenden Auflaufrollen 25 »verkürzt« wird.

Ein weiterer Vorteil der Auflaufflächen 24 und der Auflaufrollen 25 besteht darin, daß diese das Absenken der Ladebrücke 1 auf den Fahrgestellrahmen 2 im letzten Teil dieses Absenkvorgangs dämpfen.

## Patentansprüche

1. Fahrzeug zum Laden und Transportieren von Schwergut, insbesondere von Kraftfahrzeugen, mit einer Ladebrücke (1), die direkt auf dem Fahrgestellrahmen (2) sowohl längsversschiebbar wie auch um dessen Heck (18) kippbar gelagert ist, sowie mit einer durch eine Arbeitsvorrichtung (6) betätigbaren Ausfahr- und Kippvorrichtung (7, 8) für die Ladebrücke (1), dadurch gekennzeichnet, daß wenigstens eine einerseits am Fahrgestellrahmen (2) und andererseits an der Hinterachse (13) bzw. den Hinterrädern (29) des Fahrzeugs angreifende, den gegenseitigen Abstand von Fahrgestellrahmen (2) und Hinterachse (13) und damit die Höhenlage der Hinterachse (13) relativ zum Fahrgestellrahmen (2) über eine Beaufschlagung der Hinterachsfeder (17) beeinflussende Zugvorrichtung (14, 15) vorgesehen mit der Ausfahr- und Kippvorrichtung (7, 8) der Ladebrücke (1) verbunden ist.

2. Fahrzeug nach Anspruch 1, dadurch gekennzeichnet, daß die Zugvorrichtung (14, 15) wenigstens ein mit der Hinterachse (13) bzw. den Hinterrädern (29) verbundenes Seil (14) umfaßt, das über eine am Fahrgestellrahmen (2) befestigte Umlenkrolle (15) und um das exzenternokkenartig ausgebildete untere Ende (10) eines Schwenkhebels (7) der Ausfahr- und Kippvorrichtung (7, 8) geführt und an diesem befestigt ist, so daß die wirksame Seillänge während des Kippens der Ladebrücke (1) verkürzbar ist.

3. Fahrzeug nach Anspruch 1 oder 2, dadurch gekennzeichnet, daß am Fahrgestellrahmen (2) wenigstens eine das Kippen der Ladebrücke (1) nach deren Längsausfahren unterstützende schräge Auflaufffläche (24) für jeweils ein an der Ladebrücke (1) befestigtes, vorzugsweise als Rolle ausgebildetes, Auflaufstück (25) angeordnet ist.

4. Fahrzeug nach Anspruch 1, 2 oder 3, dadurch gekennzeichnet, daß die zwischen der Ladebrücke (1) und dem Fahrgestellrahmen (2) angeordnete Arbeitsvorrichtung (6) als vorwiegend in der Fahrzeuglängsmittelachse angeordnete Hydraulikeinheit (6) mit Kolben und Zylinder ausgebildet ist.

5. Fahrzeug nach Anspruch 4, dadurch gekennzeichnet, daß die Hydraulikeinheit (6) mit einer von der Fahrzeugbatterie betreibbaren Hydraulikpumpe (31) sowie mit einer bekannten hydraulischen Steuereinrichtung (32) verbunden ist, die vorzugsweise mittels eines elektrischen Fernbedienungsschalters (33) bedienbar ist.

6. Fahrzeug nach einem der Ansprüche 1 bis 5, dadurch gekennzeichnet, daß die den gegenseitigen Abstand zwischen dem vorderen Ende der Ladebrücke (1) und dem Heck (18) des Fahrgestellrahmens (2) bestimmende Arbeitsvorrichtung (6) einerseits, vorzugsweise nahe, am vorderen Ende (5) der Ladebrücke (1) und andererseits, vorzugsweise nahe, am Heck (18) des Fahrgestellrahmens (2) angreift und wenigstens ein Schwenkhebel (7) vorgesehen ist, der an einem Ende mit einem Gleitstück (8) in einer brückenfesten Gleitbahn (9) geführt und am anderen Ende (10) in einem Drehpunkt (11) unterhalb der Wirklinie der Arbeitsvorrichtung (6) sowie in bezug auf die Fahrtrichtung hinter dem Gleitstück (8), am Fahrgestellrahmen (2) schwenkbar gelagert ist, wobei die Gleitbahn (9) vorn einen Anschlag (26) aufweist, der durch Anlage am Gleitstück (8) das Längsausfahren der Ladebrücke (1) begrenzt.

7. Fahrzeug nach Anspruch 6, dadurch gekennzeichnet, daß die Gleitbahn (9) als Längsschlitz und das Gleitstück (8) als endseitige Rolle des Schwenkhebels (7) ausgebildet ist.

8. Fahrzeug nach Anspruch 6 oder 7, dadurch gekennzeichnet, daß der Anschlag (26) der Gleitbahn (9) ferner derart angeordnet ist, daß bei Anlage des Anschlags (26) am Gleitstück (8) infolge Längsausfahrens der Ladebrücke (1) der Gesamtschwerpunkt von Ladebrücke (1) und Ladegut auf die Fahrtrichtung bezogen kurz vor der Hinterachse (13) liegt.

9. Fahrzeug nach Anspruch 6, 7 oder 8, dadurch gekennzeichnet, daß zwei durch eine obere (27) und gegebenenfalls durch eine untere Querstange (28), die gegebenenfalls gekröpft sind, zu einem starren Bügel bzw. zu einem starren Rahmen verbundene Schwenkhebel (7) und zwei mit deren jeweiligem Gleitstück (8) zusammenwirkende Gleitbahnen (9) an der Ladebrücke (1) befestigt bzw. vorgesehen sind.

10. Fahrzeug nach einem der Ansprüche 1 bis 9, dadurch gekennzeichnet, daß am Heck (18) des Fahrgestellrahmens (2) eine an sich bekannte Schleppeinrichtung (20) zum Anheben und Tragen des vorderen oder hinteren Teils eines abzuschleppenden Fahrzeugs angeordnet und mit der Ladebrücke (1), zum Beispiel mittels eines Kurzseils (22) derart verbunden ist, daß die Schleppeinrichtung (20) durch das Längsausfahren der Ladebrücke (1) auf den Boden absenkbar und durch das Längseinfahren vom Boden abhebbar ist.

11. Fahrzeug nach einem der Ansprüche 1 bis 10, dadurch gekennzeichnet, daß nahe am Heck (18) des Fahrgestellrahmens (2) gesondert ausfahr- oder ausschwenkbare Bodenstützen (19) angeordnet sind.

12. Fahrzeug nach einem der Ansprüche 1 bis 11, dadurch gekennzeichnet, daß die kippfähige Lagerung der Ladebrücke (1) auf dem Heck (18) des Fahrgestellrahmens (2) als Auflagevorrichtung auf Auflagerollen (34) ausgebildet ist.

13. Fahrzeug nach einem der Ansprüche 1 bis 12, dadurch gekennzeichnet, daß am hinteren Ende (4) der Ladebrücke (1) für Bodenberührung geeignete Bodenrollen bzw. Bodenwalzen (35) angeordnet sind.

14. Fahrzeug nach einem der Ansprüche 1 bis 13, dadurch gekennzeichnet, daß am vorderen Ende (5) der Ladebrücke (1) in an sich bekannter Weise eine Seilwinde (21) angeordnet ist.

15. Fahrzeug nach einem der Ansprüche 1 bis 14, dadurch gekennzeichnet, daß die Ladebrücke (1) mittels einer vorderen (37) und einer hinteren Rastvorrichtung (38), die an der Ladebrücke (1) befestigt sind, in der Transportstellung in einer geeigneten, am Fahrgestellrahmen befestigten vorderen (39) bzw. hinteren Rastausnehmung (40) einrastbar ausgebildet ist.

## Claims

1. A vehicle for loading and transporting heavy goods, in particular motor vehicles, comprising a loading bridge (1) which is directly mounted on the chassis frame (2) and is both longitudinally displaceable and also tiltable about the tail (18) thereof, also comprising an extension and tilting device (7, 8) for the loading bridge (1) which may be operated by a working device (6), charcterised in that at least one traction device (14, 15) is provided which engages on the one hand on the chassis frame (2) and on the other hand on the rear axle (13) or on the rear wheels (29) of the vehicle, and which influences the mutual spacing between the chassis frame (2) and the rear axle (13) and thus the height of the rear axle (13) relative to the chassis frame (2) via the stress of a trailing spring (17) and is connected to the extension and tilting device (7, 8) of the loading bridge (1).

2. A vehicle according to claim 1, characterised in that the traction device (14, 15) comprises at least one cable (14) which is connected to the rear axle (13) or to the rear wheels (29) and is guided over a deflection roller (15) attached to the chassis frame (2) and around the eccentric cam-shaped lower end (10) of a swivelling lever (7) of the extension and tilting device (7, 8) and is secured thereto, so that the effective length of the cable may be shortened while the loading bridge (1) tilts.

3. A vehicle according to claim 1 or 2, characterised in that at least one sloping leading surface (24) which supports the tilting movement of the loading bridge (1) after the longitudinal extension thereof is positioned on the chassis frame (2) in each case for a leading piece (25) which is preferably designed as a roller and is attached onto the loading bridge (1).

4. A vehicle according to claims 1, 2 or 3, characterised in that the working device (6) positioned between the loading bridge (1) and the chassis frame (2) is designed as a hydraulic unit (6) comprising a piston and cylinder which is mainly positioned in the longitudinal centre axis of the vehicle.

5. A vehicle according to claim 4, characterised in that the hydraulic unit (6) is connected to a hydraulic pump (31) which may be operated by the battery of the vehicle and is also connected to a known hydraulic control device (32) which may preferably be actuated by an electric remote control switch (33).

6. A vehicle according to one of claims 1 to 5, characterised in that the working device (6) determining the mutual spacing between the front end of the loading bridge (1) and the tail (18) of the chassis frame (2) acts, on the one hand, preferably adjacent, on the front end (5) of the loading bridge (1) and, on the other hand, preferably adjacent, on the tail (18) of the chassis frame (2) and at least one swivelling lever (7) is provided which is guided at one end with a sliding piece (8) in a bridge-fast slide way (9) and at the other end (10), is pivotally mounted on the chassis frame (2) in a fulcrum (11) below the working line of the working device (6) and, with respect to the travelling direction, behind the sliding piece (8), the slide way (9) having a stop (26) at the front which restricts the longitudinal extension of the loading bridge (1) by resting on the sliding piece (8).

7. A vehicle according to claim 6, characterised in that the slide way (9) is designed as a longitudinal slit and the sliding piece (8) is designed as a roller on the end of the swivelling lever (7).

8. A vehicle according to claim 6 or 7, characterised in that the stop (26) of the slide way (9) is also positioned such that when the stop (26) rests on the sliding piece (8) due to the longitudinal extension of the loading bridge (1), the complete centre of gravity of the loading bridge (1) and of the loaded goods lies just upstream of the rear axle (13), based on the direction of travel.

9. A vehicle according to claims 6, 7 or 8, characterised in that two swivelling levers (7) connected into a rigid bow or into a rigid frame by an upper crossbar (27) and optionally by a lower crossbar (28) which are optionally bent and two slide ways (9) co-operating with the respective sliding piece (8) thereof are provided or attached onto the loading bridge (1).

10. A vehicle according to one of claims 1 to 9, characterised in that a towing device (20) known per se for raising and supporting the front or rear part of a vehicle to be towed away is positioned on the tail (18) of the chassis frame (2) and is connected to the loading bridge (1), for example by a short cable (22), such that the towing device (20) may be lowered onto the ground by the longitudinal extension of the loading bridge (1) and may be raised from the ground by the longitudinal inwards movement.

11. A vehicle according to one of claims 1 to 10, characterised in that ground supports (19) which may be moved out or swung out separately are positioned next to the tail (18) of the chassis frame (2).

12. A vehicle according to one of claims 1 to 11, characterised in that the tiltable mounting of the loading bridge (1) on the tail (18) of the chassis frame (2) is designed as a support device on support rollers (34).

13. A vehicle according to one of claims 1 to 12, characterised in that ground rollers or ground cylinders (35) which are suitable for contact with the ground are positioned at the rear end (4) of the loading bridge (1).

14. A vehicle according to one of claims 1 to 13, characterised in that a cable winch (21) is positioned in a known manner at the front end (5) of the loading bridge (1).

15. A vehicle according to one of claims 1 to 14, characterised in that the loading bridge (1) is designed so that in the transport position it may catch in a suitable front catch recess (39) or in a rear catch recess (40) secured on the chassis frame, by a front catch device (37) and a rear catch device (38) which are secured on the loading bridge (1).

**Revendications**

1. Véhicule pour le chargement et le transport de charges lourdes, en particulier de véhicules automobiles, comportant une plateforme de chargement (1) qui est montée directement sur le bâti du châssis (2) de manière à pouvoir aussi bien coulisser longitudinalement que basculer autour de l'arrière (18) de celui-ci, ainsi qu'un dispositif de déploiement et de basculement (7, 8) de la plateforme de chargement (1) pouvant être actionné par un dispositif de travail (6), lequel véhicule est caractérisé en ce qu'il comporte au moins un dispositif de traction (14, 15) qui agit, d'une part, sur le bâti du châssis (2) et d'autre part, sur l'essieu arrière (13) ou sur les roues arrière (29) du véhicule et qui influence la distance entre le bâti du châssis (2) et l'essieu arrière (13) et, par suite, la position en hauteur de l'essieu arrière (13) par rapport au bâti du châssis (2), grâce à une action sur le ressort d'essieu arrière (17) et en ce que ce dispositif de traction est relié au dispositif de déploiement et de basculement (7, 8) de la plateforme de chargement (1).

2. Véhicule selon la revendication 1, caractérisé en ce que le dispositif de traction (14, 15) comprend au moins un câble (14) relié à l'essieu arrière (13) ou aux roues arrière (29), qui passe sur une poulie de renvoi (15) fixée au bâti de châssis (2) et autour de l'extrémité inférieure (10) réalisée sous la forme d'une came excentrique, d'un levier pivotant (7) du dispositif de déploiement et de basculement (7, 8) auquel ledit câble est fixé, de sorte que la longueur efficace du câble peut être raccourcie pendant le basculement de la plateforme de chargement (1).

3. Véhicule selon l'une quelconque des revendications 1 et 2, caractérisé en ce qu'au moins une surface d'accès oblique (24) qui coopère au basculement de la plateforme de chargement (1) après le déploiement longitudinal de celle-ci, est montée sur le bâti du châssis (2), chacune de ces surfaces étant destinée à un élément d'accès (25) fixé à la plateforme de chargement (1) et de préférence réalisé sous la forme d'un galet.

4. Véhicule selon l'une quelconque des revendications 1 à 3, caractérisé en ce que le dispositif de travail (6) disposé entre la plateforme de chargement (1) et le bâti du châssis (2) est réalisé sous la forme d'un groupe hydraulique (6) avec piston et cylindre, principalement disposé dans l'axe médian longitudinal du véhicule.

5. Véhicule selon la revendication 4, caractérisé en ce que le groupe hydraulique (6) est relié à une pompe hydraulique (31) pouvant être actionnée par la batterie du véhicule ainsi qu'à un dispositif hydraulique de distribution connu (32) qui peut de préférence être manoeuvré au moyen d'un interrupteur électrique de manoeuvre à distance (33).

6. Véhicule selon l'une quelconque des revendications 1 à 5, caractérisé en ce que le dispositif de travail (6) déterminant la distance entre l'extrémité avant de la plateforme de chargement (1) et l'arrière (18) du bâti du châssis (2) agit, d'une part, de préférence de près, à l'extrémité avant (5) de la plateforme de chargement (1), et d'autre part, de préférence de près, à l'arrière (18) du bâti du châssis (2) et qu'il comporte au moins un levier pivotant (7) qui est guidé à une extrémité par un coulisseau (8) dans une glissière (9) solidaire de la plateforme de chargement (1) et qui est monté à son autre extrémité (10) de manière à pivoter sur le bâti du châssis (2), en un point d'appui (11), en dessous de la ligne d'action du dispositif de travail (6) et derrière le coulisseau (8) par rapport au sens de la marche, la glissière (9) présentant à l'avant une butée (26) qui, en s'appliquant sur le coulisseau (8), limite le déploiement longitudinal de la plateforme de chargement (1).

7. Véhicule selon la revendication 6, caractérisé en ce que la glissière (9) est réalisée sous la forme d'une fente longitudinale et le coulisseau (8) sous la forme d'un galet terminal du levier pivotant (7).

8. Véhicule selon l'une quelconque des revendications 6 et 7, caractérisé en ce que la butée (26) de la glissière (9) est, en outre, disposée de telle sorte que lorsque la butée (26) s'applique sur le coulisseau (8) par suite du déploiement longitudinal de la plateforme de chargement (1), le centre de gravité d'ensemble de la plateforme de chargement (1) et de la charge se trouve un peu en avant de l'essieu arrière (13) par rapport au sens de la marche.

9. Véhicule selon l'une quelconque des revendications 6 à 8, caractérisé en ce que deux leviers pivotants (7) reliés par une traverse supérieure (27) et éventuellement par une traverse inférieure (28), qui sont éventuellement coudées, pour former un étrier rigide ou un cadre rigide, et deux glissières (9) coopérant avec leur coulisseau respectif (8), sont fixés à la plateforme de chargement (1) ou prévus sur celle-ci.

10. Véhicule selon l'une quelconque des revendications 1 à 9, caractérisé en ce qu'un dispositif de remorquage (20) connu en lui-même servant à soulever et à porter la partie avant ou arrière d'un véhicule à remorquer, est placé à l'arrière (18) du bâti du châssis (2) et est relié à la plateforme de chargement (1), par exemple au moyen d'un câble court (22), de telle sorte que le dispositif de remouquage (20) peut être aba abaissé sur le sol par le déploiment longitudinal de la plateforme de chargement (1) et peut être soulevé du sol par la rétraction longitudinale de cette dernière.

11. Véhicule selon l'une quelconque des revendications 1 à 10, caractérisé en ce que des appuis au sol (19) pouvant se déployer ou s'écarter séparément sont montés à proximité de l'arrière (18) du bâti du châssis (2).

12. Véhicule selon l'une quelconque des revendications 1 à 11, caractérisé en ce que le montage basculant de la plate-forme de chargement (1) sur l'arrière (18) du bâti du châssis 2 est réalisé sous la forme d'un dispositif d'appui sur des rouleaux d'appui (34).

13. Véhicule selon l'une quelconque des revendications 1 à 12, caractérisé en ce que des galets d'appui au sol ou des rouleaux d'appui au sol (35) convenant au contact avec le sol, sont montés à l'extrémité inférieure de la plateforme de chargement (1).

14. Véhicule selon l'une quelconque des revendications 1 à 13, caractérisé en ce qu'un treuil (21) est monté d'une manière connue en elle-même, à l'extrémité avant (5) de la plateforme de chargement (1).

15. Véhicule selon l'une quelconque des revendications 1 à 14, caractérisé en ce que la plateforme est réalisée de manière à pouvoir s'engrener en position de transport, au moyen d'un dispositif d'engrènement avant (37) et d'un dispositif d'engrènement arrière (38) qui sont fixés à la plateforme de chargement (1), respectivement dans un évidement d'engrènement avant (39) et dans un évidement d'engrènement arrière (40) appropriés, fixés au bâti du châssis (2).

FIG.1

FIG.2

# FIG.3

# FIG.4

0 011 250